# EUROPÄISCHE PATENTANMELDUNG

(11) **EP 1 331 144 A2**
(43) Veröffentlichungstag der Anmeldung: **30.07.2003**
(21) Anmeldenummer: 02023267.4
(22) Anmeldetag: 17.10.2002
(51) Int. Cl.: B60R 21/26

(54) **Ventilanordnung für einen Druckbehälter eines Airbag-Gasgenerators**

(30) Priorität: 24.01.2002 DE 10202552
(71) Anmelder: Volkswagen Aktiengesellschaft, 38436 Wolfsburg (DE)
(72) Erfinder: Schwant, Wilfried, 39536 Meinersen (DE); Grewe, Oliver, 38118 Braunschweig (DE)
(74) Vertreter: Liebl, Thomas, Dipl.-Ing.

(57) **Zusammenfassung**

Die Erfindung betrifft eine Ventilanordnung (2) für einen Druckbehälter (1) eines Airbag-Gasgenerators. Eine Druckbehälter-Auslassöffnung (5) des Druckbehälters (1) ist durch eine Abdeckung (6) im nicht aktivierten Grundzustand abgedichtet. Bei einem Druckanstieg im Inneren des Druckbehälters (1) ist die Abdeckung (6) verformbar und zerstörbar zur Freigabe der Druckbehälter-Auslassöffnung (5). Erfindungsgemäß ist die Abdeckung (6) mittels einer Haltevorrichtung (8) von außerhalb des Druckbehälters (1) im Bereich der Druckbehälter-Auslassöffnung (5) abdichtend gehalten. In der Haltevorrichtung (8) ist ein Bolzen (7) auf der Abdeckung (6) gehalten. In einem Käfigwandbereich (13) der Haltevorrichtung (8) ist eine Materialschwächung (14) ausgebildet. Bei einem Druckanstieg im Druckbehälter (1) wirkt eine Druckkraft auf die Abdeckung (6) und über diese auf den Bolzen (7), dass bei einer bestimmten vorgebbaren Bolzenanpresskraft an einen Käfigwand-Abstützbereich (12) die Haltevorrichtung (8) im Bereich der Materialschwächung (14) reißt uns so die Abdeckung (6) durch Verlagerung des Bolzens (7) zur Zerstörung freigegeben ist. Dadurch kann das im Druckbehälter (1) erzeugte Gas in den Airbag ausströmen.

## Beschreibung

Die Erfindung betrifft eine Ventilanordnung für einen Druckbehälter eines Airbag-Generators nach dem Oberbegriff des Anspruch 1.

Eines der wichtigsten sicherheitsrelevanten Bauteile in einem Kraftfahrzeug ist eine Airbaganordnung. Üblicherweise ist eine Airbaganordnung aus den Hauptbestandteilen Airbag-Generator und Airbag aufgebaut. Der Airbag-Generator besteht u.a. aus einem Druckbehälter, in dem sich das Treibmittel befindet. Bei Aktivierung der Airbaganordnung, z.B. bei einer Kollision des Fahrzeuges, wird mittels eines Zünders das Treibmittel verbrannt und die daraus entstehenden gasförmigen Verbrennungsprodukte strömen in den im nicht aktivierten Zustand zusammengefalteten Airbag und blasen diesen auf. Dabei ist auf eine vollständige Verbrennung des Treibmittels zu achten. Einerseits um die benötigte Gasmenge zu erzeugen und andererseits muss nicht verbranntes Treibmittel durch zusätzliche Filter aufgefangen werden. Dies ist mit einem erhöhten Kosten- und Montageaufwand bei der Herstellung des Airbags verbunden.

Um das Treibmittel im nicht aktivierten Zustand der Airbaganordnung im Druckbehälter zu halten, wird eine Art Dichtscheibe verwendet. Bei Aktivierung der Airbaganordnung steigt durch die entstehenden Verbrennungsgase der Innendruck im Druckbehälter und bei Überschreitung eines bestimmten Berstdrucks wird die Dichtscheibe zerstört und die Verbrennungsgase können in den Airbag ausströmen. Dies ist mit den unterschiedlichsten Ausführungsformen gelöst.

Aus der DE 196 38 838 A1 ist eine Ventilanordnung bekannt, bei der in einem zylinderförmigen Gehäuse eine Speicherkammer für Gas eingesetzt ist. Diese ist an der Öffnungsseite mit einer ersten Berstscheibe verschlossen. Gegenüber dieser ersten Berstscheibe ist eine pyrotechnische Kartusche angeordnet, in der sich eine gaserzeugende Feststoffladung befindet. An der Stirnseite der Kartusche, die in Richtung zur ersten Berstscheibe zeigt, ist eine abtrennbare Trennscheibe angeordnet, an der ein hohler Schiebekolben befestigt ist. In der Umfangswand der Kartusche sind umlaufend Sollbruchstellen eingebracht, damit die Trennscheibe mit dem daran befestigten Schiebekolben abtrennbar ist. In der Trennwand ist durch Abplattung eine zweite Berstscheibe gebildet, an die der Hohlraum des Schiebekolbens grenzt. Der Hohlraum des Schiebekolbens mündet in einen Austrittsraum, der vor der ersten Berstscheibe angeordnet ist. Bei Aktivierung des Airbag-Gasgenerators reißt die Trennscheibe an den Sollbruchstellen ab und wird in Richtung Austrittsraum verschoben. Dabei durchstößt der mitverschobene Schiebekolben die erste Berstscheibe und das Gas aus der Speicherkammer kann über Austrittsöffnungen im Austrittsraum in den Airbag strömen. In einem nächsten Schritt wird durch den in der Kartusche erzeugten Gasdruck die Abplattung, d. h. die zweite Berstscheibe in der Trennwand zerstört und das in der Kartusche erzeugte Gas strömt durch den Hohlraum des Schiebekolbens in die Speicherkammer und von dort über Austrittsöffnungen im Austrittsraum in den Airbag. So ist mit dem bereits vorliegenden Druckgas in der Speicherkammer und dem erzeugten Gas aus der Feststoffladung eine gewünschte Entfaltungscharakteristik des Airbags erreichbar.

Nachteilig an dieser Ventilanordnung ist der Einsatz von zwei Berstscheiben. Dabei muss sichergestellt sein, dass ein Abreißen der Sollbruchstellen der Trennscheibe und damit eine Zerstörung der ersten Berstscheibe zeitlich vor der Zerstörung der zweiten Berstscheibe geschieht, da ansonsten die volle Funktion der Airbaganordnung nicht gewährleistet ist. Zusätzlich muss die zweite Berstscheibe so dimensioniert sein, dass eine vollständige Verbrennung der Feststoffladung in der Kartusche sichergestellt ist, da sonst nicht verbrannte Feststoffe unerwünscht mit in den Airbag strömen können. Eine genaue Festlegung des Öffnungsdrucks, bei dem eine vollständige Verbrennung der Feststoffladung sichergestellt ist, ist hier jedoch nachteilig von mehreren Parametern, wie der Festigkeit der Sollbruchstellen in der Umfangswand der Trennscheibe und der Festigkeit der Abplattung der Trennscheibe abhängig, die alle in einem bestimmten Verhältnis zueinander vorliegen müssen. Somit ist die Auslegung der Sollbruchstellen der Trennscheibe und der zweiten Berstscheibe aufwendig und in der Herstellung schwierig. Auch das Vorliegen von einem Druckgas und einer Feststoffladung ist mit erhöhtem Aufwand und Kosten verbunden.

Aus der EP 0 819 585 A1 ist eine Ventilanordnung zum Aufblasen eines in einem Lenkrad untergebrachten Airbags bekannt. Bei Aktivierung der Airbaganordnung wird ein Druckstück durch den Druckanstieg des aus dem Treibsatz erzeugten Gases so gegen eine Berstscheibe verfahren, dass diese zerstört wird. Damit wird sowohl ein Einströmen des entstehenden Gases in die Mischkammer ermöglicht als auch ein Öffnen eines Druckgasbehälters bewirkt. So strömt eine Gasmischung aus expandierendem Druckgas und erzeugtem Gas aus dem Treibsatz aus der Mischkammer in den Airbag. Durch den geometrischen Aufbau der Ventilanordnung ist nur eine Verwendung bei einem in einem Lenkrad untergebrachten Airbag vorgesehen. Nachteilig ist auch, dass das weggesprengte Teil der Berstscheibe in einer Ausnehmung in der Mischkammer zwar aufgenommen, aber nicht gehalten ist. So besteht die Möglichkeit, dass dieses Teil in unerwünschter Weise mit in den Airbag ausströmt.

Weiter ist aus der DE 43 27 098 A1 eine Ventilanordnung bekannt, bei der eine pyrotechnisch angetriebene Kolbenstange eine Dichtscheibe an einer Sollbruchzone aus einer Druckspeicherwand herausdrückt. Die Steuerung der Kolbenstange erfolgt hier mittels eines separaten pyrotechnischen Antriebs. Damit ist zwar der Öffnungsdruck mittels des separaten pyrotechnischen Treibsatzes genau steuerbar, aber der Aufbau mit zwei separaten Treibsätzen ist sehr aufwendig und kostenintensiv. Zusätzlich muss noch eine Steuerung der beiden Treibsätze vorhanden sein, da die Kolbenstange erst bei Erreichen des für eine vollständige Verbrennung nötigen Druckes in Bewegung gesetzt werden darf. Dadurch entstehen weitere Faktoren, die die Ventilanordnung nachteilig verkomplizieren und verteuern.

Bei einer allgemein bekannten, gattungsgemäßen Ventilanordnung für einen Druckbehälter eines Airbag-Gasgenerators weist der Druckbehälter wenigstens eine Druckbehälter-Auslassöffnung für ein im Druckbehälter befindliches Druckmedium auf. Die Druckbehälter-Auslassöffnung ist im nicht aktivierten Grundzustand zum dichten Verschließen der Druckbehälter-Auslassöffnung mit einer verformbaren Abdeckung abgedeckt. Bei einem Druckanstieg im Inneren des Druckbehälters ist die Abdeckung verformbar und zerstörbar zur Freigabe der Druckbehälter-Auslassöffnung.

In einer konkreten Ausführung ist die verformbare und zerstörbare Abdeckung meist aus einem Gummi bzw. gummiähnlichem Material hergestellt. Insbesondere bei einer Großserien-Fertigung der Abdeckung ist dies mit vielen Parametern behaftet, die den Berstdruck der Abdeckung beeinflussen können. Zur Sicherstellung, dass sich die Abdeckung unterhalb der Druckbehälterfestigkeit öffnet, muss ein deutlicher Sicherheitsabstand in der Festigkeit der Abdeckung gewählt werden. Befindet sich die Abdeckung jedoch innerhalb des breiten Streubandes im niedrigen Festigkeitsbereich, besteht das Risiko, dass das Treibmittel nicht vollständig verbrennt. Um ein Ausströmen von nicht verbranntem Treibmittel zu verhindern, sind zusätzliche Maßnahmen wie z. B. Filter notwendig. Dies ist als nachteilig anzusehen, weil ein erhöhter technischer Aufwand nötig ist, um eine einwandfreie Funktion der Ventilanordnung zu gewährleisten. Daneben ist ein erhöhter Kostenaufwand zu erwarten. Eine genaue Einstellung des Öffnungsdrucks der Ventilanordnung ist daher nur sehr schwer möglich.

Aufgabe der Erfindung ist es eine gattungsgemäße Ventilanordnung so weiterzubilden, dass der Öffnungsdruck genau festlegbar ist, insbesondere zur vollständigen Verbrennung des Treibmittels bei Airbag-Gasgeneratoren.

Dies wird mit den Merkmalen des Anspruch 1 gelöst.

Gemäß Anspruch 1 ist der verformbaren Abdeckung von der Außenseite her ein Anschlagelement zugeordnet. Bei einem Druckanstieg im Druckbehälter im aktivierten Zustand wirkt von der Druckbehälter-Innenseite her über das Druckmedium eine Druckkraft auf die Abdeckung und verformt diese so, dass mittels der verformten Abdeckung eine Kraft auf das Anschlagelement übertragbar ist. Bei einer bestimmten vorgebbaren auf das Anschlagelement einwirkenden Kraft ist das Anschlagelement von der Abdeckung weg verlagerbar, so dass die Abdeckung zur Freigabe der Druckbehälter-Auslassöffnung durch den von der Druckbehälter-Innenseite her anstehenden Druck zerstörbar ist.

Vorteilhaft bei dieser Ventilanordnung für einen Druckbehälter eines Airbag-Gasgenerators ist, dass das Anschlagelement als einfaches mechanisches Bauteil herstellbar ist, bei dem mittels einer fest zuordenbaren Kenngröße, wie z. B. der Material-Festigkeit, ein bestimmter Öffnungsdruck der Ventilanordnung unabhängig von der verformbaren Abdeckung eingestellt werden kann. Der Toleranzbereich bei der Fertigung solch einfacher Bauteile ist so schmal, dass mit einfachen konstruktionstechnischen Maßnahmen ein bestimmter Öffnungsdruck einstellbar ist. Je nach verwendeten Treibmittel in dem Druckbehälter kann somit mittels einer einfachen Anpassung des Anschlagelements ein Öffnungsdruck unabhängig von der Abdeckung genau so eingestellt werden, dass die vollständige Verbrennung des Treibmittels sichergestellt ist. Damit können zusätzliche Filter oder ähnliche Maßnahmen zum Auffangen von nicht verbrannten Treibmitteln entfallen.

In einer bevorzugten Weiterbildung ist im Bereich des Anschlagelements wenigstens eine Materialschwächung vorgesehen. Die wenigstens eine Materialschwächung reißt bei einer bestimmten vorgebbaren auf das Anschlagelement einwirkenden Kraft und gibt damit mittels einer Verlagerung wenigstens eines Teiles des Anschlagelements die Abdeckung frei. Somit ist durch eine einfache Kraftübertragung von der verformten Abdeckung auf das mit wenigstens einer Materialschwächung versehene Anschlagelement ein an der Materialschwächung definiertes und reproduzierbares Abreißen wenigstens eines Teiles des Anschlagelements gewährleistet.

Gemäß einer konkreten Ausführungsform weist das Anschlagelement eine Haltevorrichtung auf, die einen Bolzenkäfig aufweist, in dem ein der Abdeckung und einem Käfigwand-Abstützbereich zugeordneter Bolzen gehalten ist. Bei einem Druckanstieg im Druckbehälter im aktivierten Zustand wirkt von der Druckbehälter-Innenseite her über das Druckmedium eine Druckkraft auf die Abdeckung und über diese auf den Bolzen dergestalt, dass bei einer bestimmten vorgebbaren Bolzenanpresskraft an den Käfigwand-Abstützbereich die Haltevorrichtung reißt und die Verlagerung des Bolzens von der verformbaren Abdeckung weg freigibt. Damit ist die Abdeckung zur Freigabe der Druckbehälter-Auslassöffnung durch den von der Druckbehälter-Innenseite her anstehenden Druck zerstörbar. Bei dieser Ausführungsform ist das Anschlagelement zweiteilig ausgeführt, nämlich einerseits eine Haltevorrichtung und andererseits ein Bolzen. Mit dem Bolzen ist ein Bauteil mit einer sehr einfachen geometrischen Form geschaffen und die Haltevorrichtung kann den jeweiligen geometrischen Gegebenheiten der Ventilanordnung angepasst werden.

In einer bevorzugten Ausführung ist in einem Käfigwandbereich der Haltevorrichtung wenigstens eine Materialschwächung ausgebildet, so dass die Haltevorrichtung im Bereich der wenigstens einen Materialschwächung reißt. Damit ist ein genau definierbares Teilstück der Haltevorrichtung vorgegeben, das im aktivierten Zustand abreißt. Durch einfache konstruktionstechnische Änderungen der Materialschwächung ist ein Einstellen des Öffnungsdruckes einfach möglich.

In einer bevorzugten Weiterbildung weist die Haltevorrichtung an einem der Druckbehälter-Auslassöffnung zugewandten Haltevorrichtungs-Ende einen Haltevorrichtungs-Flanschbereich auf. Dieser ist einem Auslassöffnungs-Randbereich zugeordnet. Zwischen dem Haltevorrichtungs-Flanschbereich und dem Auslassöffnungs-Randbereich ist die Abdeckung im montierten Zustand verklemmt. Damit ist die Abdeckung ortsfest gehalten und dichtet durch die Anlageverbindung des Haltevorrichtungs-Flanschbereichs an dem Auslassöffnungs-Randbereich die Druckbehälter-Auslassöffnung ab.

Bei einer Weiterbildung ist die Haltevorrichtung von einem am Druckbehälter mittelbar oder unmittelbar festgelegten Fanggehäuse umgeben, das wenigstens eine Fanggehäuse-Auslassöffnung aufweist. In dem Fanggehäuse sind abgerissenen Käfigteile auffangbar. Damit ist ein Weiterströmen der abgerissenen Käfigteile in den Airbag ausgeschlossen. Die wenigstens eine Fanggehäuse-Auslassöffnung ist so dimensioniert, dass abgerissene Käfigteile nicht hindurchtreten können.

Gemäß einer weiteren Ausführungsform liegt das Fanggehäuse im montierten Zustand mit einem Gehäuse-Anlagenbereich an einer der Abdeckung abgewandten Außenseite des Haltevorrichtungs-Flanschbereich an. Dadurch ist die Abdeckung nicht nur durch den Haltevorrichtungs-Flanschbereich sondern auch durch den Gehäuse-Anlagenbereich an der Druckbehälter-Auslassöffnung gehalten.

In einer besonders bevorzugten Ausgestaltung ist das Fanggehäuse mit einem dem Druckbehälter zugeordneten im Querschnitt ringförmigen Endbereich unter Umschließen der Haltevorrichtung in einen vom Druckbehälter wegragenden im Querschnitt ringförmigen Druckbehälter-Anschlussbereich in einer Anlageverbindung einschiebbar und festlegbar. Damit sind die Bauteile Abdeckung, Bolzen und Haltevorrichtung mittels dem Fanggehäuse an der Druckbehälter-Auslassöffnung festgehalten. Bei dieser Anordnung sind alle Bauteile auf kleinstem Bauraum optimal zusammengefügt.

Gemäß einer bevorzugten Weiterbildung schließt sich an den Haltevorrichtungs-Flanschbereich der Bolzenkäfig an. Der Bolzen ist im Bolzenkäfig formschlüssig aufgenommen und stützt sich einerseits an der Abdeckung und andererseits an dem Käfigwand-Abstützbereich ab. Damit ist bei einem Druckanstieg in der Druckbehälter-Innenseite eine einwandfreie Kraftübertragung von der Abdeckung über den Bolzen auf den Käfigwand-Abstützbereich gewährleistet. Der vorgegebene Öffnungsdruck wird somit direkt auf die Materialschwächung an der Haltevorrichtung übertragen. Etwaige Ungenauigkeiten, die durch ein Spiel des Bolzens im Bolzenkäfig auftreten könnten, sind somit ausgeschlossen. Die Funktionssicherheit wird hierdurch erheblich erhöht.

In einer bevorzugten Ausführungsform ist der Käfigwand-Abstützbereich gegenüberliegend zu der Abdeckung ausgebildet. Durch diese Anordnung ist eine optimale lineare Kraftübertragung bei einem Druckanstieg in der Druckbehälter-Innenseite gewährleistet. Gemäß einer besonders bevorzugten Weiterbildung ist der Bolzenkäfig durch einen den Bolzen umgreifenden U-förmigen Haltebügel ausgebildet. Der Haltebügel bildet mit einem U-Basisbereich den Käfigwand-Abstützbereich und in wenigstens einem der beiden U-Schenkel des Haltebügels ist die wenigstens eine Materialschwächung ausgebildet. Damit sind mit einer einfachen geometrischen Form alle Anforderungen und Funktionen des Bolzenkäfigs erfüllt. Der Bolzen ist durch den U-förmigen Haltebügel in seiner Position gehalten, der U-Basisbereich bildet die Abstützung für den Bolzen und an einem der U-Schenkel des Haltebügels ist die Materialschwächung ausbildbar.

Bei einer Weiterbildung ist die Materialschwächung als Sollbruchstelle ausgebildet, vorzugsweise durch eine herstellungstechnisch einfache Materialeinschnürung. Dadurch ist einem vorbestimmten Öffnungsdruck eine dementsprechende Sollbruchstelle zuordenbar und das Reißen dieser Sollbruchstelle bei dem vorgegebenen Öffnungsdruck ist jederzeit reproduzierbar.

Gemäß einer weiteren Ausführungsform ist das Druckmedium ein pyrotechnischer Treibsatz, der bei Zündung ein Gas freisetzt. Grundsätzlich können Treibmittel jeglichen Aggregatszustands eingesetzt werden. So können Feststoffe unter Druck stehende Flüssiggase oder unter Druck stehende Gase verwendet werden, aber auch Gemische aus Treibmitteln unterschiedlicher Aggregatzustände sind einsetzbar. Die Abdichtung des Druckbehälters mittels der Abdeckung ist jederzeit sichergestellt.

In einer besonders bevorzugten Ausgestaltung ist die Ventilanordnung als Hochdruckventil für einen Airbag-Gasgenerator ausgebildet. Die Ventilanordnung ist grundsätzlich bei jeder Airbaganordnung einsetzbar.

Anhand einer Zeichnung wird die Erfindung näher erläutert.

Es zeigen:
- Fig. 1: eine schematische Darstellung eines Längsschnitts durch ein Druckbehälter mit einer erfindungsgemäßen Ventilanordnung,
- Fig. 2: eine vergrößerte schematische Darstellung einer Ventilanordnung im nicht aktivierten Grundzustand,
- Fig. 3: eine vergrößerte schematische Darstellung einer Ventilanordnung im aktivierten Zustand, und
- Fig. 4: eine schematische Darstellung einer Haltevorrichtung.

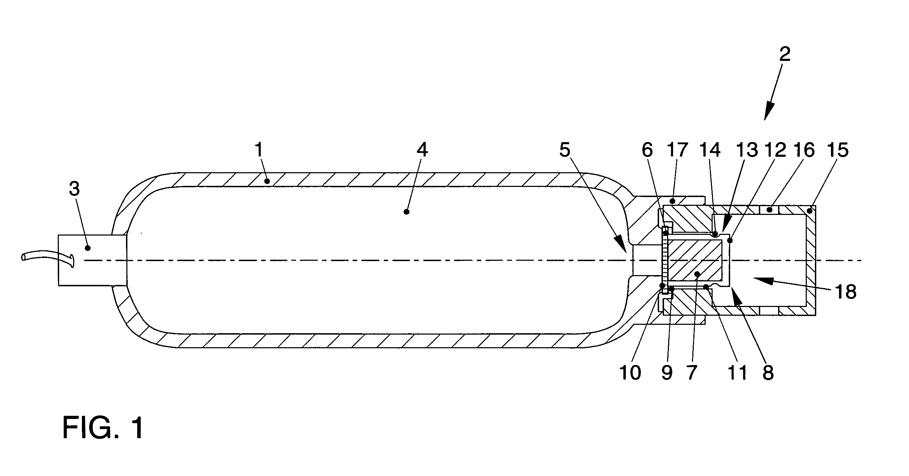

In Fig. 1 ist ein Längsschnitt durch einen Druckbehälter 1 mit einer Ventilanordnung 2 schematisch dargestellt. An dem Druckbehälter 1 befindet sich ein Zünder 3, mit dem ein in dem Druckbehälter 1 befindlicher pyrotechnischer Treibsatz 4 gezündet werden kann. Bei der Zündung des Treibsatzes 4 entsteht aus diesem ein Gas.

Gegenüberliegend des Zünders 3 ist die Ventilanordnung 2 am Druckbehälter 1 angeordnet. Über einer Druckbehälter-Auslassöffnung 5 ist eine Abdeckung 6 angeordnet. Mit der Abdeckung 6, die verformbar und zerstörbar ist, ist der Druckbehälter 1 abgedichtet. Die Abdeckung 6 ist zwischen einem Auslassöffnungs-Randbereich 10 der Druckbehälter-Auslassöffnung 5 und einem Haltevorrichtungs-Flanschbereich 9 einer Haltevorrichtung 8 verklemmt.

Die Haltevorrichtung 8 weist einen Bolzenkäfig 11 auf, in dem ein Bolzen 7 gehalten ist. Der Bolzen 7 ist im Bolzenkäfig 11 formschlüssig aufgenommen und stützt sich einerseits an der Abdeckung 6 und andererseits an einem Käfigwand-Abstützbereich 12 ab. In einem Käfigwandbereich 13 sind zwei Materialschwächungen 14 eingebracht.

Die Haltevorrichtung 8 ist von einem Fanggehäuse 15 umgeben, das zwei Fanggehäuse-Auslassöffnungen 16 aufweist und in dem abgerissene Käfigteile auffangbar sind. Das Fanggehäuse 15 liegt im montierten Zustand an einer der Abdeckung 6 abgewandten Außenseite des Haltevorrichtungs-Flanschbereichs 9 an. In einen vom Druckbehälter 1 wegragenden, im Querschnitt ringförmigen Druckbehälter-Anschlussbereich 17 ist das Fanggehäuse 15 in einer Anlageverbindung einschiebbar und festlegbar.

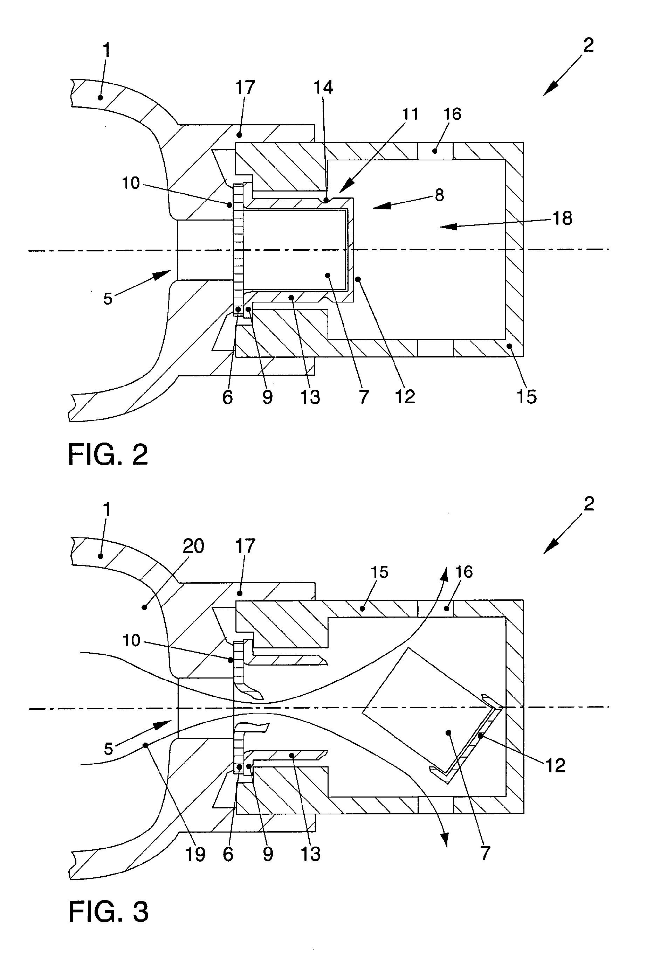

Fig. 2 zeigt eine Vergrößerung der Ventilanordnung 2 von Fig. 1 im nicht aktivierten Grundzustand. Bei Aktivierung des Zünders 3 wird der Treibsatz 4 verbrannt und es entsteht im Druckbehälter 1 ein Gas. Durch den daraus resultierenden Druckanstieg im Druckbehälter 1 drückt eine Kraft von Innen her auf die Abdeckung 6 und durch den formschlüssigen Aufbau auf den Bolzen 7 bzw. auf den Käfigwand-Abstützbereich 12. Bei Erreichen eines über die Auslegung von Materialschwächungen 14 genau einstellbaren Öffnungsdrucks (Kraftniveaus) reißen diese als Sollbruchstellen ausgelegten Materialschwächungen 14 am Käfigwandbereich 13 ab, was eine Freigabe des Bolzens 7 bewirkt, und die Abdeckung 6 zerreißt aufgrund des von der Druckbehälter-Innenseite her anstehenden Drucks. Der Bolzen 7 und abgerissene Käfigteile werden in dem Fanggehäuse 15 aufgefangen. Das in dem Druckbehälter 1 erzeugte Gas strömt durch die Druckbehälter-Auslassöffnung 5 in das Fanggehäuse 15 und von dort durch die Fanggehäuse-Auslassöffnungen 16 in den hier nicht dargestellten Airbag. Der beschriebene Gasstrom ist mit den Richtungspfeilen 19 und 20 in der Fig. 3 dargestellt.

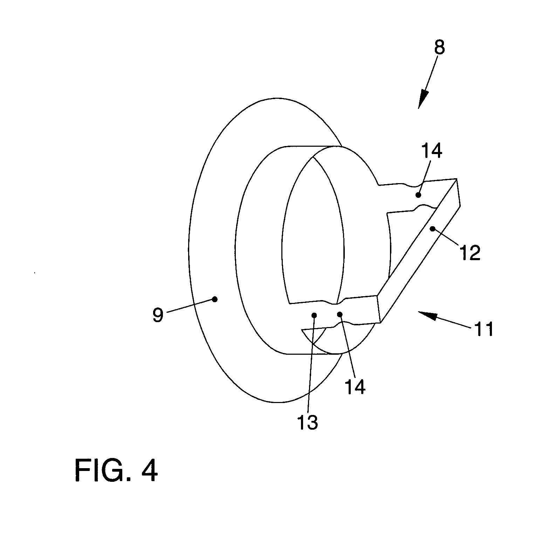

In Fig. 4 ist schließlich eine Haltevorrichtung 8 dargestellt. An den Haltevorrichtungs-Flanschbereich 9 schließt sich der Bolzenkäfig 11 an. Diese ist als U-förmige Haltebügel ausgebildet. Der U-Basisbereich bildet den Käfigwand-Abstützbereich 12. In den U-Schenkeln sind die Materialschwächungen 14 als Sollbruchstellen ausgelegt.

### BEZUGSZEICHENLISTE

- 1: Druckbehälter
- 2: Ventilanordnung
- 3: Zünder
- 4: Treibsatz
- 5: Druckbehälter-Auslassöffnung
- 6: Abdeckung
- 7: Bolzen
- 8: Haltevorrichtung
- 9: Haltevorrichtungs-Flanschbereich
- 10: Auslassöffnungs-Randbereich
- 11: Bolzenkäfig
- 12: Käfigwand-Abstützbereich
- 13: Käfigwandbereich
- 14: Materialschwächung
- 15: Fanggehäuse
- 16: Fanggehäuse-Auslassöffnung
- 17: Druckbehälter-Anschlussbereich
- 18: Anschlagelement
- 19: Richtungspfeil
- 20: Richtungspfeil

## Patentansprüche

1. Ventilanordnung für einen Druckbehälter eines Airbag-Gasgenerators, wobei der Druckbehälter wenigstens eine Druckbehälter-Auslassöffnung für ein im Druckbehälter befindliches Druckmedium aufweist, wobei die Druckbehälter-Auslassöffnung im nicht aktivierten Grundzustand zum dichten Verschließen der Druckbehälter-Auslassöffnung mit einer verformbaren Abdeckung abgedeckt ist, die bei einem Druckanstieg im Inneren des Druckbehälters ab einem bestimmten Druck verformbar und zerstörbar ist zur Freigabe der Druckbehälter-Auslassöffnung,
**dadurch gekennzeichnet,**
**dass** der verformbaren Abdeckung (6) von der Außenseite her ein Anschlagelement (18) zugeordnet ist dergestalt, dass im aktivierten Zustand bei einem Druckanstieg im Druckbehälter (1) von der Druckbehälter-Innenseite her über das Druckmedium eine Druckkraft auf die Abdeckung (6) wirkt und diese so verformt, dass mittels der verformten Abdeckung (6) eine Kraft auf das Anschlagelement (18) übertragbar ist dergestalt, dass bei einer bestimmten vorgebbaren auf das Anschlagelement (18) einwirkenden Kraft das Anschlagelement (18) von der Abdeckung (6) weg verlagerbar ist, so dass die Abdeckung (6) zur Freigabe der Druckbehälter-Auslassöffnung (5) durch den von der Druckbehälter-Innenseite her anstehenden Druck zerstörbar ist.

2. Ventilanordnung nach Anspruch 1, **dadurch gekennzeichnet, dass** im Bereich des Anschlagelements (18) wenigstens eine Materialschwächung (14) vorgesehen ist dergestalt, dass die wenigstens eine Materialschwächung (14) bei einer bestimmten vorgebbaren auf das Anschlagelement (18) einwirkenden Kraft reißt und die Verlagerung wenigstens eines Teiles des Anschlagelements (18) von der Abdeckung (6) weg freigibt.

3. Ventilanordnung nach Anspruch 2, **dadurch gekennzeichnet,**
- **dass** das Anschlagelement (18) eine Haltevorrichtung (8) aufweist, die einen Bolzenkäfig (11) aufweist, in dem ein der Abdeckung und einem Käfigwand-Abstützbereich (12) zugeordneter Bolzen (7) gehalten ist, und
- **dass** im aktivierten Zustand bei einem Druckanstieg im Druckbehälter (1) von der Druckbehälter-Innenseite her über das Druckmedium (4) eine Druckkraft auf die Abdeckung (6) und über diese auf den Bolzen (7) wirkt dergestalt, dass bei einer bestimmten vorgebbaren Bolzenanpresskraft an den Käfigwand-Abstützbereich (12) die Haltevorrichtung (8) reißt und die Verlagerung des Bolzens (7) von der verformbaren Abdeckung (6) weg freigibt, so dass die Abdeckung (6) zur Freigabe der Druckbehälter-Auslassöffnung (5) durch den von der Druckbehälter-Innenseite her anstehenden Druck zerstörbar ist.

4. Ventilanordnung nach Anspruch 3, **dadurch gekennzeichnet, dass** in einem Käfigwandbereich (13) der Haltevorrichtung (8) wenigstens eine Materialschwächung (14) ausgebildet ist dergestalt, dass die Haltevorrichtung im Bereich der wenigstens einen Materialschwächung reißt.

5. Ventilanordnung nach Anspruch 3 oder 4, **dadurch gekennzeichnet,**
- **dass** die Haltevorrichtung (8) an einem der Druckbehälter-Auslassöffnung (5) zugewandten Haltevorrichtungs-Ende einen Haltevorrichtungs-Flanschbereich (9) aufweist, der einem Auslassöffnungs-Randbereich (10) zugeordnet ist, und
- **dass** die Abdeckung (6) im montierten Zustand zwischen dem Haltevorrichtungs-Flanschbereich (9) und dem Auslassöffnungs-Randbereich (10) verklemmt ist.

6. Ventilanordnung nach einem der Ansprüche 3 bis 5, **dadurch gekennzeichnet, dass** die Haltevorrichtung (8) von einem am Druckbehälter (1) mittelbar oder unmittelbar festgelegten Fanggehäuse (15) umgeben ist, das wenigstens eine Fanggehäuse-Auslassöffnung (16) aufweist und in dem abgerissene Käfigteile auffangbar sind.

7. Ventilanordnung nach Anspruch 6, **dadurch gekennzeichnet, dass** das Fanggehäuse (15) im montierten Zustand mit einem Gehäuse-Anlagenbereich an einer der Abdeckung (6) abgewandten Außenseite des Haltevorrichtungs-Flanschbereichs (9) anliegt.

8. Ventilanordnung nach Anspruch 6 oder 7, **dadurch gekennzeichnet, dass** das Fanggehäuse (15) mit einem dem Druckbehälter (1) zugeordneten im Querschnitt ringförmigen Endbereich unter Umschließen der Haltevorrichtung (8) in einen vom Druckbehälter (1) wegragenden im Querschnitt ringförmigen Druckbehälter-Anschlussbereich (17) in einer Anlageverbindung einschiebbar und festlegbar ist.

9. Ventilanordnung nach einem der Ansprüche 3 bis 8, **dadurch gekennzeichnet, dass** sich an den Haltevorrichtungs-Flanschbereich (9) der Bolzenkäfig (11) anschließt.

10. Ventilanordnung nach einem der Ansprüche 3 bis 9, **dadurch gekennzeichnet, dass** der Bolzen im Bolzenkäfig (11) formschlüssig aufgenommen ist und sich an der Abdeckung (6) und an dem Käfigwand-Abstützbereich (12) abstützt.

11. Ventilanordnung nach einem der Ansprüche 3 bis 10, **dadurch gekennzeichnet, dass** der Käfigwand-Abstützbereich (12) gegenüberliegend zu der Abdeckung (6) ausgebildet ist.

12. Ventilanordnung nach einem der Ansprüche 3 bis 11, **dadurch gekennzeichnet, dass** der Bolzenkäfig (11) durch einen den Bolzen (7) umgreifenden U-förmigen Haltebügel ausgebildet ist.

13. Ventilanordnung nach Anspruch 12, **dadurch gekennzeichnet,**
- **dass** der Haltebügel mit einem U-Basisbereich den Käfigwand-Abstützbereich (12) ausbildet, und
- **dass** im Bereich wenigstens eines der beiden U-Schenkel des Haltebügels wenigstens eine Materialschwächung (14) ausgebildet ist.

14. Ventilanordnung nach einem der Ansprüche 2 bis 13, **dadurch gekennzeichnet, dass** die Materialschwächung (14) als Sollbruchstelle ausgebildet ist, vorzugsweise durch eine Materialeinschnürung.

15. Ventilanordnung nach einem der Ansprüche 1 bis 14, **dadurch gekennzeichnet, dass** das Druckmedium ein pyrotechnischer Treibsatz (4) ist, der bei Zündung ein Gas freisetzt.

16. Ventilanordnung nach einem der Ansprüche 1 bis 15, **dadurch gekennzeichnet, dass** die Ventilanordnung (2) als Hochdruckventil für einen Airbag-Gasgenerator ausgebildet ist.
